(19) Europäisches Patentamt
European Patent Office
Office européen des brevets

(11) **EP 3 783 356 A1**

(12) **EUROPEAN PATENT APPLICATION**
published in accordance with Art. 153(4) EPC

(43) Date of publication:
**24.02.2021 Bulletin 2021/08**

(51) Int Cl.:
***G01N 29/04*** (2006.01)

(21) Application number: **19788319.2**

(22) Date of filing: **12.04.2019**

(86) International application number:
**PCT/CN2019/082492**

(87) International publication number:
**WO 2019/201177 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2018 CN 201810351360**

(71) Applicant: **Jiangsu Bide Science and Technology Co., Ltd.**
**Jiangyin, Jiangsu 214404 (CN)**

(72) Inventors:
• **CAI, Guoqiang**
**Jiangyin, Jiangsu 214404 (CN)**
• **WANG, Jianqun**
**Jiangyin, Jiangsu 214404 (CN)**
• **HE, Ming**
**Jiangyin, Jiangsu 214404 (CN)**

(74) Representative: **Ipside**
**7-9 Allées Haussmann**
**33300 Bordeaux Cedex (FR)**

(54) **TRAIN COMPONENT CRACK DAMAGE MONITORING METHOD AND SYSTEM**

(57) The present invention provides a method and system for monitoring crack damage of a train component. The method for monitoring comprises: providing a cellular sensor network device on the detection structure of a train component to be detected; transmitting the response signal collected by the cellular sensor network device to an on-board data processing device; pre-processing the response signal collected by the cellular sensor network device to obtain damage data of the detection structure, wherein the damage data comprises: data on a crack length of the detection structure; transmitting damage data of the detection structure to a center server for storage and subsequent processing. The method and system for monitoring crack damage of a train component according to the present invention can detect crack damage of the train component on the basis of a response signal, and store damage data to carry out prediction and evaluation of the development tendency of damaged parts on the basis of the damage data, providing reliability evaluation and hazard warning, and realizing monitoring of a crack damage of the train component.

Start

Providing a cellular sensor network device on the detection structure of a train component to be detected — 101

Transmitting a response signal collected by the cellular sensor network device to an on-board data processing device — 102

Pre-processing the response signal collected by the cellular sensor network device to obtain damage data of the detection structure — 103

transmitting damage data of the detection structure to a server for storage and subsequent processing — 104

*FIG. 1*

EP 3 783 356 A1

## Description

## Technical Field

The present invention relates to the technical field of damage analysis, and relates to a method and system for monitoring crack damage of train components in particular.

## Background of the Invention

Locomotives and bullet train sets, train sets are important devices for rail transportation with great starting and brake accelerations during operation and with the running parts and coupling parts thereof undergoing huge changes in stress. After a train runs for 300,000 miles, the running part thereof will suffer from much mechanical damage. A bogie frame as a key load-bearing component of a locomotive or vehicle has functions of supporting the car body, operation and steering, and the anti-fatigue performance thereof is of extraordinary significance to safe operation of the vehicle. Most of conventional bogies are designed with the method of increasing safety coefficients to ensure the strength margin. This method has problems of static strength enrichment and partially insufficient or excessive fatigue strength, and cannot predict the frame fatigue life accurately at the design stage.

Wheels are important running parts of a locomotive or vehicle, and easily produce fatigue cracks on wheel rims. If not found in a timely manner, they will seriously endanger traffic safety of the locomotive or vehicle. Damage to the fatigue cracks on wheel rims is common in the locomotives and vehicles launched into use in China at present. Such damage to wheels is quite common in history. However, as the Chinese railways grow rapidly, the speeds of trains reach up to 300km/h and the weights of the axles of heavy trucks are up to 30T, and the interaction between a wheel and a truck will also present a law of linear progressive increase as the speed increases while the contact stress will also increase as the axle weight increases. Under this high speed and heavy load conditions, due to scrapes on treads of wheels, stripping and other damage, impact loads will have an effect between wheels and tracks, and these factors will lead to an increase in the inner stress of rims of wheels.

Car couplers as cast steel unavoidably have some defects therein or on the surfaces thereof such as air holes, slag inclusion, and shrinkage. Such defects in casting may be understood as macrocracks. Due to the presence of macrocracks, section stress is not distributed evenly, thereby leading to an increase in the stress of crack tips. The more serious the defect is, the more serious the stress concentration will be. In this case, the car couplers in operating conditions of low loads can cause crack extension and will induce generation of welding cracks. When the car couplers are under the action of dynamic loads, a great amount of operating stress will lead to generation of fatigue cracks of casts. However, in a part with casting defects, due to stress concentration, the small operating stress on the stressed section may similarly lead to generation of fatigue cracks. If areas with great stress such as hook ear holes, coupler tail pin holes or hook tongues have casting defects, this will accelerate generation and extension of fatigue cracks.

As for the structure damage to different parts of the trains or rails and relevant detection technologies, there have been a great number of researches and applications in China and foreign countries. However, most of them involve four-point arc positioning and three-point hyperbolic positioning, and cannot avoid factors such as environmental noises, measuring errors, and errors in a time delay calculation method, and cannot solve the problem of boundary damage in particular.

## Summary of the Invention

A series of simplified form concepts are introduced in the Summary part of the Invention, and will be further explained in a detailed manner in the Embodiments part. The Summary part of the Invention does not mean that the key features and necessary technical features of the technical solutions to be protected are intended to be defined, and even does not mean that the scope of protection of the technical solutions to be protected are intended to be determined.

An aspect of the embodiments in the present invention discloses a method for monitoring crack damage to a train component, comprising:

a cellular sensor network device is provided on the detection structure of a train component to be detected, wherein the cellular sensor network device comprises a plurality of piezoelectric sensors, each of which serves as an excitation signal loading point and/or a response signal collection point;
a response signal collected by the cellular sensor network device is transmitted to an on-board data processing device;
the response signal collected by the cellular sensor network device is pre-processed to obtain damage data of the detection structure, wherein the damage data comprises: data on a crack length of the detection structure;
the damage data of the detection structure is transmitted to a center server for storage and subsequent processing.

In an embodiment of the present invention, a plurality of piezoelectric sensors are arranged to be a honeycomb array comprising at least one basic detection unit in a regular hexagon; each of the piezoelectric sensors is a node in the honeycomb array as an excitation signal loading point and/or response signal collection point;

the basic detection unit comprises six piezoelectric sensors arranged in a regular hexagon; microcontrollers are embedded in the piezoelectric sensors which serve as Lamb wave excitation signalizers and Lamb wave signal receivers.

An embodiment of the present invention further comprises:

a drive signal is excited on a health detection structure at an excitation signal loading point at a first time interval, and a Lamb wave is produced on the detection structure; a first Lamb wave response signal for the Lamb wave is collected at each response signal collection point;

a first Lamb wave response signal is acquired and a dispersion relationship between a Lamb wave and changes in the transmission angle is established in an anisotropic composite laminate of the detection structure; theoretical speed distribution of the Lamb wave is obtained as benchmark information;

a drive signal is excited on the detection structure to be detected at an excitation signal loading point at a second time interval, and a Lamb wave is produced in the detection structure; a second Lamb wave response signal for the Lamb wave is collected at each response signal collection point.

the second Lamb wave response signal is analyzed in a time domain and a frequency domain to extract characteristic information; a signal difference coefficient (SDC) value corresponding to each of the response signal collection points is calculated with the second Lamb wave response signal as a damage signal and the first Lamb wave response signal as a reference signal on the basis of the damage signal, the reference signal, benchmark information, and characteristic information;

an area where crack damage may exist in the detection structure is reconstructed according to the SDC value obtained and a principle of probability imaging;

a crack direction is judged on the basis of the SDC value, and the SDC value in the crack direction is corrected for enhancing reconstructed image information in the crack direction. A crack damage image is reconstructed by using the principle of probability imaging. A SDC distribution diagram is drawn, a length of a crack is evaluated on the basis of the SDC distribution diagram, and the damage data is created.

An embodiment of the present invention further comprises:

The center server predicts the damage growth rate of the detection structure on the basis of the historical damage data of the detection structure stored.

In an embodiment of the present invention, predicting the damage growth rate of the detection structure comprises:

life distribution characteristics and verification indicator parameters of the detection structure are obtained according to the historical damage data, and a Bayesian probability prediction model corresponding to damage to the detection structure is established;

prior distribution of the verification indicator parameters is analyzed according to the historical damage data;

The model parameters of the Bayesian probability prediction model are optimized by using the Markov chain Monte Carlo method and the damage growth rate of the detection structure is predicted.

Another aspect of the embodiments of the present invention discloses a system for monitoring crack damage of a train component, characterized in comprising: a cellular sensor network device, a multichannel data converter, an on-board data processing device, and a center server.

The cellular sensor network device is provided on a detection structure of a train component to be detected, and comprises a plurality of piezoelectric sensors, each of which serves as an excitation signal loading point and/or response signal collection point;

The multichannel data converter is configured to transmit a response signal collected by the cellular sensor network device to the on-board data processing device;

The on-board data processing device is configured to preprocess the response signal collected by the cellular sensor network device to obtain damage data of the detection structure and transmit the damage data of the detection structure to the center server, wherein the damage data comprises: data on a crack length of the detection structure;

The center server is configured to store damage data of the detection structure, and process the damage data to realize remote monitoring of a detection structure of the train component to be detected.

In an embodiment of the present invention, a plurality of piezoelectric sensors are arranged to be a honeycomb array comprising at least one basic detection unit in a regular hexagon; each of the piezoelectric sensors is a node in the honeycomb array as an excitation signal loading point and/or response signal collection point;

the basic detection unit comprises six piezoelectric sensors arranged in a regular hexagon;
microcontrollers are embedded in the piezoelectric sensors which serve as Lamb wave excitation signalizers and Lamb wave signal receivers.

In an embodiment of the present invention, the on-board data processing device comprises:

a first signal excitation module for exciting a drive signal on a health detection structure at a first time interval using a probe, producing a Lamb wave in the detection structure, and collecting a first Lamb wave response signal for the Lamb wave at each response signal collection point;

a benchmark information acquisition module for acquiring a first Lamb wave response signal and establishing a dispersion relationship between a Lamb wave and changes in the transmission angle in an anisotropic composite laminate of the detection structure by means of the Mindlin plate theory, and obtaining theoretical speed distribution of the Lamb wave as benchmark Information;

a second signal excitation module for exciting a drive signal on the detection structure to be detected at a second time interval using a probe, producing a Lamb wave in the detection structure, and collecting a second Lamb wave response signal for the Lamb wave at each response signal collection point;

a damage information acquisition module for analyzing the second Lamb wave response signal in a time domain and a frequency domain to extract characteristic information; calculating a signal difference coefficient (SDC) value corresponding to each of the response signal collection points with the second Lamb wave response signal as a damage signal and the first Lamb wave response signal as a reference signal on the basis of the damage signal, the reference signal, benchmark information, and characteristic information;

an imaging analysis module for reconstructing an area where crack damage may exist in the detection structure according to the SDC value obtained and a principle of probability imaging; judging a crack direction on the basis of the SDC value, correcting the SDC value in the crack direction for enhancing reconstructed image information in the crack direction, and reconstructing a crack damage image by using the principle of probability imaging; drawing a SDC distribution diagram, and evaluating a crack length on the basis of the SDC distribution diagram.

In an embodiment of the present invention, the center server predicts the damage growth rate of the detection structure on the basis of the historical damage data of the detection structure stored.

In an embodiment of the present invention, the center server comprises:

a historical data acquisition module for acquiring historical damage data of the detection structure, wherein the damage data includes: data on a crack length of the detection structure;

a prediction model building module for obtaining life distribution characteristics and verification indicator parameters of the detection structure according to the historical damage data, and establishing Bayesian probability prediction model corresponding to damage to the detection structure;

a damage growth prediction module for analyzing prior distribution of the verification indicator parameters according to the historical damage data; optimizing model parameters of the Bayesian probability prediction model using the Markov chain Monte Carlo method and predicting the damage growth rate of the detection structure.

The method and system for monitoring crack damage of train components according to the present invention can detect crack damage of a train component on the basis of a response signal, and store damage data to carry out prediction and evaluation of the development tendency of damaged parts on the basis of the damage data, providing reliability evaluation and hazard warning, realizing monitoring of crack damage of the train component, and providing more accurate and visualized bases for maintenance and replacements of trains.

## Brief description of the Drawings

For clearly explaining the technical solution in the embodiments of the present invention or in the prior art, the figures that shall be used in the embodiments or description of the prior art are introduced simply in the following text. Obviously, the figures described below are only some of the embodiments in the present invention. According to these figures, a person skilled in the art could further obtain other figures without involving any inventive effort.

Figure 1 is a flow chart of an embodiment of the method for monitoring crack damage of a train component according to the present invention;

Figure 2 is a schematic diagram of arranging a sensor network device in an embodiment of the method for monitoring crack damage of a train component according to the present invention;

Figure 3 is a structural diagram in an embodiment of the system for monitoring crack damage of a train component according to the present invention;

Figure 4 is a schematic diagram of a module in an embodiment of the on-board data processing device in the system for monitoring crack damage of a train component according to the present invention;

Figure 5 is a schematic diagram of a module in an embodiment of the center server in the system for monitoring crack damage of a train component according to the present invention.

**Detailed Description of Embodiments**

Here, exemplary embodiments in the present invention were described in a detailed manner by making reference to the figures. It shall be noted that unless otherwise specifically explained, relative arrangement of components and steps, numeric expressions and values stated in these embodiments did not limit the scope of the present invention.

Meanwhile, it shall be understood that for facilitating description, the sizes of various parts as illustrated in the figures were not drawn according to the actual proportional relationships.

Description of at least one exemplary embodiment below was only illustrative in fact, and could not serve as any limitation on the present invention and application or use thereof.

As for the technologies, methods and devices known to a person skilled in the art, no detailed discussion would be made. However, under appropriate circumstances, the technologies, methods and devices shall be deemed as a part of the description.

It shall be noted that similar symbols and letters denoted similar items in the figures below. Thus, once an item was defined in a figure, it was not necessary to further discuss the same in the subsequent figures.

The embodiments of the present invention may be applied in computer systems/center servers, and could be operated together with other numerous general or dedicated computing system environments or configurations. Examples of well-known computing systems, environments and/or configurations suitable for use together with computer systems/center servers included but were not limited to: personal computer systems, center server computer systems, thin clients, thick clients, handheld or laptop devices, microprocessor-based systems, set top boxes, programmable consumer electronic products, network personal computers, minicomputer systems, mainframe computer systems, distributed cloud computing technology environments comprising any of the aforesaid systems, and so forth.

Computer systems/center servers may be described in the general context of computer system executable instructions (such as program modules) executed by computer systems. Generally, program modules may include routines, programs, target programs, modules, logic, data structures and so forth, which executed specific tasks or realized specific abstract data types. The computer systems/center servers may be implemented in a distributed cloud computing environment where, tasks were executed by remote processing devices which were linked by communication networks. In the distributed cloud computing environment, program modules may be located on storage media of local or remote computing systems comprising storage devices.

"First" and "Second" in the following text were only used for making distinction in description, and had no other special meanings.

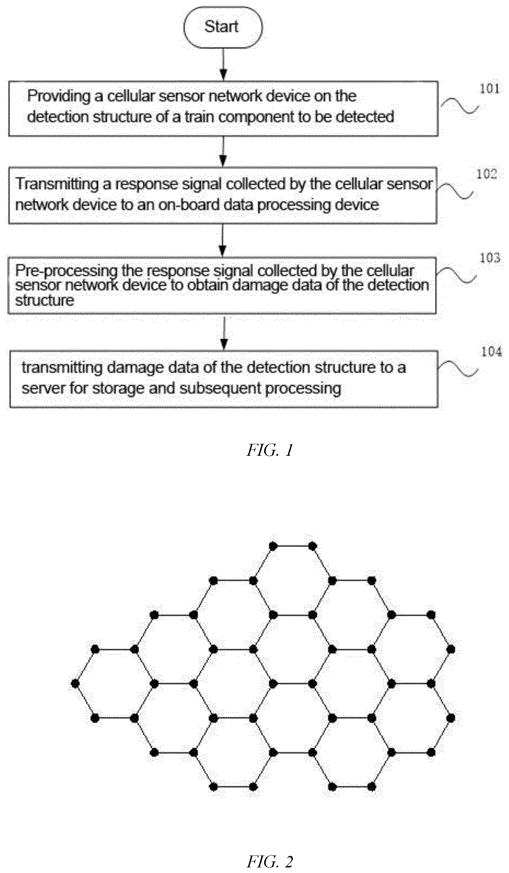

Figure 1 was a flow chart of an embodiment of the method for monitoring crack damage of a train component according to the present invention. As shown in Figure,

in Step 101, a cellular sensor network device was provided on a detection structure of a train component to be detected, wherein the cellular sensor network device comprised a plurality of piezoelectric sensors, each of which served as an excitation signal loading point and/or response signal collection point. The train component may be a key component on high-speed trains, railways and so forth such as wheel, car coupler and bogie. Microcontrollers may be embedded in the piezoelectric sensors which carried out, as Lamb wave excitation signalizers and Lamb wave signal receivers, respectively, multipath detection according to a certain time sequence, and stored the Lamb wave signals collected in a sensor.

In Step 102, a response signal collected by the cellular sensor network device was transmitted to an on-board data processing device. When a high-speed train traveled at an equal speed per mile, the Lamb wave signal data stored in the sensor was transmitted to the multichannel data converter which transmitted the Lamb wave signal to the on-board data processing device for pre-processing and verifying a crack position and a damaged length to obtain damage data of the detection structure.

In Step 103, a response signal collected by the cellular sensor network device was pre-processed to obtain damage data of the detection structure, wherein the damage data comprised: data on a crack length of the detection structure.

In an embodiment, data stored in the sensor was pre-processed. The pre-processing process comprised: 1. signal filtering: noises and false information were filtered, and temperature characteristics of a piezoelectric sensor were compensated; 2. information regarding fault features was extracted with methods such as wavelet analysis, HHT analysis and empirical mode decomposition to determine the damage degree on key parts of the train; 3. arrival signals and a latency time therebetween were received by means of piezoelectric elements, and the damaged position was determined by using an elliptical positioning method, wherein errors in damage positioning near the sensor would be eliminated by means of honeycomb arrangement in a regular hexagon.

In the embodiment, the crack damage of a train component was detected on the basis of Lamb wave imaging, and damage data of the detection structure may be obtained by the following steps:

First, a drive signal was excited on a health detection structure at a first time interval using a probe, and a Lamb wave was produced in the detection structure. A first Lamb wave response signal for the Lamb wave was collected at each response signal collection point.

As an elastic guided wave transmitted in solid structures under free boundary conditions, a Lamb wave was featured with slow attenuation and a long transmission distance, and was quite sensitive to minor damage in structures. Thus, the Lamb wave was excited in a detection structure by loading a drive signal after amplified with a charge amplifier onto piezoelectric sensors. When structure health was detected, the Lamb wave response signals in all excitation/sensing channels were collected as benchmark signals of the detection structure.

Then, a first Lamb wave response signal was acquired, and a dispersion relationship between a Lamb wave and changes in the transmission angle was established in an anisotropic composite laminate of the detection structure by means of the Mindlin plate theory; theoretical speed distribution of the Lamb wave was obtained as benchmark information. The Mindlin plate theory was generally referred to as a first-order shearing theory of plates. It was hypothesized in the Mindlin plate theory that the plate displacement was changed linearly in the plate thickness direction, but the plate thickness was constant, and it was hypothesized therein that normal stress in the plate thickness direction was ignored, that is, plane stress hypothesis. Through the Mindlin plate theory, a dispersion relationship between a Lamb wave and changes in the transmission angle could be established in an anisotropic composite laminate of the detection structure, and theoretical speed distribution of the Lamb wave could be obtained, providing benchmark information for damage imaging.

Subsequently, a drive signal was excited on the detection structure to be detected at a second time interval using a probe, and a Lamb wave was produced in the detection structure. A second Lamb wave response signal for the Lamb wave was collected at each response signal collection point. The second Lamb wave response signal was analyzed in a time domain and a frequency domain to extract characteristic information. A signal difference coefficient (SDC) value corresponding to each of the response signal collection points was calculated with the second Lamb wave response signal as a damage signal and the first Lamb wave response signal as a reference signal on the basis of the damage signal, the reference signal, benchmark information, and characteristic information.

A Lamb wave signal excited and received by a piezoelectric sensing element may be analyzed in the time and frequency domains by using wavelet transform to extract characteristic information for measuring the flight time and group speed of the Lamb wave actually transmitted in the monitored part and comparing the same with the benchmark information. Energies of a damage scattering signal may be superimposed and amplified with a focusing method according to the characteristics of Lamb signal transmission, thereby improving a signal-noise ratio of the signal. A signal transmission wave chart was reconstructed by using the self-adaptive focusing ability of wave sources with the time reversal method. The damaged position and area were displayed by using signal focusing.

Then, an area where crack damage may exist in the detection structure was reconstructed according to a SDC value obtained and using a principle of probability imaging. The reconstructed image information in the crack direction was enhanced by correcting a signal difference coefficient (SDC) value in the crack direction in the damaged area according to the reflection and scattering effects of crack damage on a Lamb wave monitoring signal, realizing image reconstruction of crack damage. A crack damage image was reconstructed by using the principle of probability image.

According to the basic principle of Lamb wave transmission, most Lamb wave signals, if blocked, would hardly be transmitted forward when the transmission medium was interrupted or discontinuous. Even though the crack width was narrow, it would cause quite apparent attenuation of a Lamb wave in the forward transmission direction as long as the length thereof was greater than the wavelength of the Lamb wave. The signal difference coefficient (SDC) value may be used to characterize the statistical characteristic difference between a damage signal and a reference signal. The SDC value reflected the damage degree and the damaged distance.

The reconstructed image information in the crack direction was enhanced by correcting a signal difference coefficient (SDC) value in the crack direction in the damaged area according to the reflection and scattering effects of crack damage on a Lamb wave monitoring signal, realizing image reconstruction of crack damage. Moreover, the crack length was evaluated by a SDC distribution diagram at the receiving end.

Then, an area where crack damage may exist in the plate may be reconstructed according to a SDC value obtained and using a principle of probability imaging. The SDC value difference was calculated according to the path where the piezoelectric sensors were located in the damaged area, which could judge the crack direction. The SDC value in the direction for judging a crack was corrected to 1, and the crack damage image was reconstructed by using a conventional principle of probability imaging. The SDC values of six excitation/sensing channels were arranged to be a regular hexagon, and the probability distribution diagram corresponding to all sensing paths was superposed, thereby obtaining a damage distribution probability at any point in the detection area, and reconstructing a crack damage image.

Afterwards, the crack direction was judged on the basis of the SDC value, and the SDC value in the crack direction was corrected for enhancing the reconstructed image information in the crack direction. A crack damage image was reconstructed by using the principle of probability imaging. A SDC distribution diagram was drawn, and a crack length was evaluated on the basis of the SDC distribution diagram. The SDC distribution diagram may be drawn with the various existing methods, and the crack length was evaluated.

Energies of a damage scattering signal may be superimposed and amplified with a focusing method according to the characteristics of Lamb signal transmission for improving a signal-noise ratio of the damage scattering signal. A signal transmission wave chart was reconstructed by using the self-adaptive focusing ability of wave sources with the time reversal method. The damaged position and area were displayed by means of signal focusing. According to the imaging result, the length of the crack damage was calculated on the monitoring path in the judged crack direction according to the number of image pixels that exceeded the threshold values as set and distances thereof.

During Lamb-based imaging, energies of a damage scattering signal were superimposed and amplified with a focusing method for improving a signal-noise ratio of the damage scattering signal. During damage positioning, a signal transmission wave chart was reconstructed by using the self-adaptive focusing ability of wave sources with the time reversal method. The damaged position and area were displayed by means of signal focusing. During evaluation of the crack size, the reconstructed image information in the crack direction was enhanced by correcting a signal difference coefficient (SDC) value in the crack direction in the damaged area according to the reflection and scattering effects of crack damage on a Lamb wave monitoring signal, realizing image reconstruction of crack damage. Moreover, the crack length was evaluated by the SDC distribution diagram at the receiving end.

As shown in Figure 2, a plurality of piezoelectric sensors were arranged to be a honeycomb array comprising at least one basic detection unit in a regular hexagon. Each piezoelectric sensor was a node in the honeycomb array as an excitation signal loading point or response signal collection point. The basic detection unit comprised six piezoelectric sensors arranged in a regular hexagon. Microcontrollers were embedded within the piezoelectric sensors which were used as Lamb wave signalizers and Lamb wave signal receivers.

A waveform generator was connected with a power amplifier via wire. The power amplifier was connected via wire with an exciter in the monitoring path consisting of cellular sensor network devices which were provided on a structure to be detected. A sensor in the monitoring path was connected with a charge amplifier via wire. The charge amplifier was connected with an on-board data processing device via wire.

According to the size of a detection area, a honeycomb array in a regular hexagon formed by using a certain quantity of piezoelectric sensors embedded with microcontrollers was covered on the surface of a part to be detected. For excitation, the quantity of cellular sensor networks disposed may be determined according to the actual condition of a structure to be monitored. Six piezoelectric elements could theoretically form a monitoring unit, and as for a large structure, scanning could be carried out by closely disposing a plurality of cellular sensor networks in light of conditions.

A second Lamb wave response signal was analyzed in a time domain and a frequency domain by using wavelet transformation algorithm to extract characteristic information for measuring the time and speed actually transmitted in the detection structure to be detected. During extraction of characteristic information of a component to be detected, a Lamb wave signal excited and received by a piezoelectric sensing element was analyzed in the time and frequency domains by using wavelet transform.

A damage scattering signal was obtained by subtracting a second Lamb wave response signal by a first Lamb wave response signal with the first Lamb wave response signal as a base signal. Energies of the damage scattering signal were superposed and amplified with a focusing method for improving a signal-noise ratio of the damage scattering signal and time reversing the damage scattering signal. Time reversal could be carried out on a second Lamb wave response signal comprising defect information, and the processed second Lamb wave response signal was loaded as a new wave source onto an excitation signal loading point for launch for exciting the drive signal on the detection structure to be detected and realizing secondary focusing of the Lamb wave at a defective place. An amplitude focus diagram was established for imaging recognition of a damaged position and area.

In an embodiment, first, a cellular sensor network device was disposed on a part to be detected to divide the monitored area into several basic monitoring units. A Lamb wave was excited and received by using nodes in the cellular sensor network device. A signal transmission wave chart was reconstructed by means of focusing and time reversal, and the damaged position and area were displayed by means of signal focusing. The reconstructed image information in the crack direction was enhanced by correcting a signal difference coefficient value in the crack direction in the damaged area according to the reflection and scattering effects of a Lamb wave monitoring signal, and a crack length was evaluated by the SDC distribution diagram at the receiving end.

In the method for acquiring damage data of a train component based on Lamb wave imaging provided in the embodiment above, a cellular sensor network device was provided on the detection structure of a train component to be detected, and piezoelectric sensors in the cellular sensor network device were used as excitation signal loading points and/or response signal collection points. A signal difference coefficient (SDC) value corresponding to each of the response signal collection points was calculated with the second Lamb wave response signal as the second Lamb wave response signal as a damage signal and the first Lamb wave response signal as a reference signal; a crack damage image was reconstructed by using the principle of probability imaging, and a SDC distribution diagram was drawn; a crack length was evaluated on the basis of the SDC distribution diagram, and focusing, time reversal and the like could be carried out on response signals. The method could overcome the effects brought about by factors such as environmental noises, measuring errors and time delay, and had high accuracy of calculating energies of a signal and a low misjudgment rate when the damage was judged. The method could reduce "blind areas" during detection such that the damage monitoring scope was greater and could improve the accuracy of damage discrimination.

In Step 104, the damage data of the detection structure was transmitted to the center server for storage and subsequent processing.

The center server may be any of various center servers carrying out data processing by using a hadoop-spar carrying platform, and having huge space for data storage so as to store damage data of the detection structure. The center server may comprise smart identification and diagnosis software, and apply a smart diagnosis method and a pattern recognition method such as artificial neural network, fuzzy logic and genetic algorithm; it may be integrated with a Lamb wave imaging and smart crack identification technology, and could further improve effectiveness and reliability of diagnosis.

In an embodiment of the present invention, the center server further predicted the damage growth rate of the detection structure on the basis of historical damage data of the detection structure stored, specifically comprising the following steps:

First, life distribution characteristics and verification indicator parameters of damage to the detection structure were obtained according to the historical damage data, and a Bayesian probability prediction model corresponding to the damage to the detection structure was established;
Second, prior distribution of the verification indicator parameters was obtained according to an analysis of the historical damage data;

At last, model parameters of the Bayesian probability prediction model were optimized with the Markov chain Monte Carlo method, and the damage growth rate of the detection structure was predicted.

The basic theory of the Markov Chain Monte Carlo algorithm was Markov process. In the MCMC algorithm, for sampling on a designated distribution, according to the Markov process, first, state transition was conducted continuously starting from any state, and a stable distribution was converged finally.

In an embodiment, information regarding fault features extracted by the on-board data processing device, as an input value, was transmitted to a center server comprising smart identification and diagnosis software, and an optimal fitting function was obtained by means of a fitting analysis of damage growth data acquired in actual operating conditions.

The service life of a train component obeyed random variables of the statistical law, and was generally described by a service life distribution function (also referred to as a cumulative distribution function). The service life of a train component mostly obeyed probability distribution of continuous random variables including logarithmic distribution, exponential distribution, normal distribution, Weibull distribution and so forth. The lognormal distribution as a good one has non-negativity and was probability distribution that could describe the service life of the train component accurately, applicable to damage characteristics produced by the train component as the travel distance was accumulated in the present invention.

It was determined that the service life distribution of damage to the detection structure was lognormal distribution, wherein the density function of lognormal distribution was as follows:

$$p(x) = \frac{1}{x\sigma\sqrt{2\pi}} e^{-\frac{(\ln x - \mu)^2}{2\sigma^2}} \quad (4);$$

wherein, $\mu$ was an average value of damage sizes (mm); $\sigma$ was a standard deviation of damage sizes (mm).

The prior distribution of the verification indicator parameters was determined as a combination of lognormal distribution $f(\theta)$ of crack growth rate of a detection structure with maximum likelihood estimation $f(x|\theta)$, posterior distribution $f(\theta|x)$ was obtained by using a Bayesian probabilistic prediction model in combination with crack data x of the detection structure in the historical damage data, and iterative calculation was carried out to obtain the crack growth rate per mile.

Bayesian Decision Theory was a method of carrying out a subjective probability estimate of some unknown states, then correcting the probability of occurrence using the Bayesian formula, and making an optimal decision using an expected value and refining probability when information was incomplete. According to the Bayesian formula as follows, prior distribution may be obtained.

$$f(\theta|x) = \frac{f(x|\theta)f(\theta)}{f(x)}$$ .

In the embodiment, prior distribution was a combination of lognormal distribution $f(\theta)$ of the crack growth rate of a train component with maximum likelihood estimation $f(x|\theta)$. Posterior distribution $f(\theta|x)$ was obtained by using a Bayesian probabilistic prediction model in combination with actual crack data x. A mean value (expected value) of crack growth rates was obtained finally by means of a large number of iterations. This mean value was a growth rate per mile after the crack growth of key parts of a high-speed train tended to be stable.

For example, a hit-and-run incident occurred in a city. There were cars only in two colors in the city, i.e. 15% of blue cars and 85% of green cars. When the accident occurred, a man A witnessed the accident. A identified the car as a blue one. However, according to the on-site analysis made by the expert, the probability of correct witnessing was 80% in that condition. In this case, the probability that the car causing the accident was a blue one was calculated by using the following method:

A: The color of the car witnessed by the eyewitness was blue;

B1: The car causing the accident was blue; B2: The car causing the accident was green.

$$P(A|B_1) = 80\%;\ P(A) = 80\%P(B_1) + 20\%P(B_2)$$

$$P(B_1|A) = \frac{P(B_1)}{P(A|B_1)}P(A) = \frac{15\%}{80\% \times 15\% + 20\% \times 85\%} \times 80\% = 41\%$$

The Bayesian probabilistic prediction model was described with the following formula:

$$\sigma_{ldi} = z_1 + z_0 T_i \qquad i = 1,\ldots,n \quad \sim N(z_1 + z_0 T_i\ ;\sigma^2) \tag{5};$$

$$f(z_0, z_1, \sigma^2) = f(z_0, z_1) * f(\sigma^2) \tag{6};$$

$$\log(z_0) \sim N_2(\mu,\sigma^2) \tag{7};$$

$$\sigma^2 \sim IG(a,b) \tag{8};$$

wherein $\delta_{ldi}$ denoted an amount of standard crack length damage (mm), and $z_1$ was the length of an initial crack. If a car component had no initial crack, $z_0$ was a growth rate per mile (mm/3000km, mm/5000km or mm/10000km, as determined according to actually different measurement data), and T was an accumulated operating mile after historical damage data was collected last time. In this case, $\tau$-G(a,b), wherein a=b=0.01.

Formula (5) was a linear relationship between a crack length and an accumulated operating mile, wherein $\delta_{ldi}$ obedience mean was normal distribution of $\sigma_{ldi} = z_1 + z_0 T_i$. The formula was used for calculating an accumulated crack length. However, considering that $\delta_{ldi}$ was affected by many factors, formula accuracy, i.e. prediction accuracy, was improved by introducing a Bayesian probability formula and using normal distribution. At this point, all parameters were no longer constant values, and would obey respective distributions.

Formula (6) was a product of two probability distributions resulted from decomposition of probability distributions as obeyed by $z_0$ and $z_1$. What shall be explained was that the formula was implicated in the calculation process, and could not be expressed specifically, but this did not affect calculation.

Formula (7) denoted obedient lognormal distribution of $z_0$, and $\mu$ was an average value of $z_0$. It could be obtained from the historical data that o2 was a standard deviation of $z_0$, obeying inverse gamma distribution. With the sequence from Formula (5) to Formula (8), the maximal likelihood estimation $f(x|\theta)$ was obtained first according to the historical damage data in an inverted sequence during actual calculation, and then it was determined that $\tau$-G(a,b) through practical experience, wherein a=b=0.01. As in Formula (7), the prior distribution was determined as lognormal distribution $f(\theta)$. At last, a Bayesian formula was used by combining Formula (6) and the maximal likelihood estimation $f(x|\theta)$ obtained from the historical damage data, thereby obtaining a verification indicator parameter. After a prediction model was established, MCMC iteration was carried out by using winbugs software in the embodiment, that is, the process above was completed. The specific calculation with the formula above and MCMC iteration could be carried out specifically with many existing methods. The maximal likelihood estimation was disturbed by too many factors, and thus cannot be represented by a specific formula. The object of using the MCMC method in the embodiment was to create a great amount of data obeying the historical data distribution law, and the data was used to denote the maximal likelihood estimation $f(x|\theta)$, and the average value of $z_0$, i.e. damage growth rate, was obtained finally.

In the method for predicting crack damage of a train component in the embodiment above, historical damage data of key parts on a high-speed train (accumulated crack length in equal running mileage) was collected, life distribution and verification indicator parameters of key parts on the high-speed train were determined, and a Bayesian statistical distribution model was established; prior distribution of the verification indicator parameters was determined on the basis of historical data; the damage growth rate of key parts on the high-speed train was predicted by using WinBUGS on the basis of the MCMC method.

The method for monitoring crack damage of a train component according to the present invention could detect crack damage of a train component on the basis of a response signal, and store damage data to carry out prediction and evaluation of the development tendency of damaged parts on the basis of the damage data, providing reliability evaluation and hazard warning, realizing monitoring of crack damage of the train component, and providing more accurate and visualized bases for maintenance and replacements of trains.

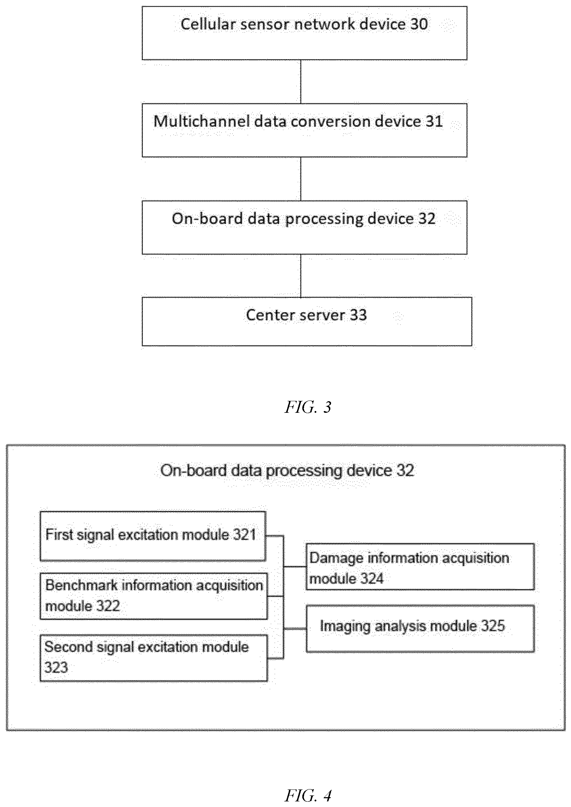

Figure 3 was a structural diagram in an embodiment of the system for monitoring crack damage of a train component according to the present invention. As shown in Figure 3, the system for monitoring crack damage of the train component in the present invention comprised a cellular sensor network device 30, a multichannel data converter 31, an on-board data processing device 32 and a center server 33.

The cellular sensor network device 30 was provided on a detection structure of the train component to be detected, and comprised a plurality of piezoelectric sensors, each of which served as an excitation signal loading point and/or response signal collection point. A plurality of piezoelectric sensors were arranged to be a honeycomb array comprising at least one basic detection unit in a regular hexagon. Each piezoelectric sensor was a node in the honeycomb array as an excitation signal loading point or response signal collection point. The basic detection unit comprised six piezoelectric sensors arranged in a regular hexagon. Microcontrollers were embedded within the piezoelectric sensors which were used as Lamb wave signalizers and Lamb wave signal receivers.

The multichannel data converter 31 was configured to transmit a response signal collected by the cellular sensor network device 30 to the on-board data processing device 32. The multichannel data converter 31 had a plurality of input/output channels. All cellular sensor network devices 30 disposed were networked by means of the multichannel data converter 31 so as to transmit response signals collected by all cellular sensor network devices 30 to the on-board data processing device 32 for processing.

The on-board data processing device 32 was configured to preprocess the response signal collected by the cellular sensor network device to obtain damage data of the detection structure and transmit the damage data of the detection structure to the center server, wherein the damage data comprised: data on a crack length of the detection structure.

In an embodiment, as shown in Figure 4, the on-board data processing device 32 in the present invention comprised a first signal excitation module 321, a benchmark information acquisition module 322, a second signal excitation module 323, a damage information acquisition module 324 and an imaging analysis module 325.

The first signal excitation module 321 excited a drive signal on a health detection structure at a first time interval using a probe, produced a Lamb wave in the detection structure, and collected a first Lamb wave response signal for the Lamb wave at each response signal collection point.

The benchmark information acquisition module 322 acquired a first Lamb wave response signal and established a dispersion relationship between a Lamb wave and changes in the transmission angle in an anisotropic composite laminate of the detection structure by means of the Mindlin plate theory, and obtained theoretical speed distribution of the Lamb wave as benchmark Information.

The second signal excitation module 323 excited a drive signal on the detection structure to be detected at a second time interval using a probe, produced a Lamb wave in the detection structure, and collected a second Lamb wave response signal for the Lamb wave at each response signal collection point. The damage information acquisition module 324 analyzed the second Lamb wave response signal in a time domain and a frequency domain to extract characteristic information. The damage information acquisition module 324 calculated a signal difference coefficient (SDC) value corresponding to each of the response signal collection points with the second Lamb wave response signal as a damage signal and the first Lamb wave response signal as a reference signal on the basis of the damage signal, the reference signal, benchmark information, and characteristic information.

The imaging analysis module 325 reconstructed an area where crack damage may exist in the detection structure according to the SDC value obtained and the principle of probability imaging. The imaging analysis module 325 judged a crack direction on the basis of the SDC value, corrected the SDC value in the crack direction for enhancing reconstructed image information in the crack direction, and reconstructed a crack damage image by using the principle of probability imaging. The imaging analysis module 325 drew a SDC distribution diagram, and evaluated a crack length on the basis of the SDC distribution diagram.

The damage information acquisition module 324 analyzed a second Lamb wave response signal in a time domain and a frequency domain by using wavelet transformation algorithm to extract characteristic information for measuring the time and speed actually transmitted in the detection structure to be detected. The damage information acquisition module 324 obtained a damage scattering signal by subtracting a second Lamb wave response signal by a first Lamb wave response signal with the first Lamb wave response signal as a base signal. The damage information acquisition module 324 superposed and amplified energies of the damage scattering signal with a focusing method for improving a signal-noise ratio of the damage scattering signal and time reversing the damage scattering signal.

The second signal excitation module 323 carried out time reversal of a second Lamb wave response signal comprising defect information, loaded the processed second Lamb wave response signal as a new wave source onto an excitation signal loading point for launch for exciting the drive signal on the detection structure to be detected and realizing secondary focusing of the Lamb wave at a defective place, and established an amplitude focus diagram for imaging recognition of a damaged position and area.

The center server 33 was configured to store damage data of the detection structure, and processed the damage data to realize remote monitoring of a detection structure of the train component to be detected.

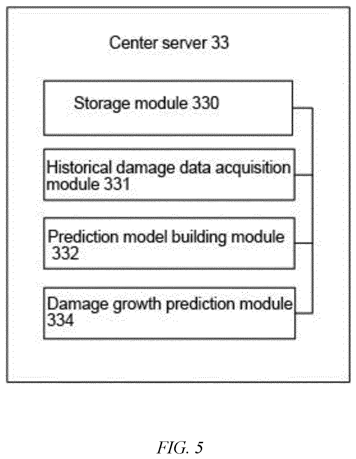

In an embodiment, as shown in Figure 5, the center server 33 comprised: a storage module 330, a historical data acquisition module 331, a prediction model building module 332 and a damage growth prediction module 334.

The storage module 330 was used for storing damage data of the detection structure of a train component obtained by the on-board data processing device 32. The damage data comprised: data on a crack length of the detection structure.

The historical data acquisition module 331 acquired historical damage data of the detection structure. The damage data comprised: data on a crack length of the detection structure.

The prediction module building module 332 obtained service life distribution characteristics and verification indicator parameters of damage to the detection structure according to the historical damage data, and established a Bayesian probability prediction model corresponding to the damage to the detection structure.

The damage growth prediction module 333 obtained prior distribution of verification indicator parameters by analyzing the historical damage data, optimized model parameters of the Bayesian probability prediction model using the Markov chain Monte Carlo method, and predicted the damage growth rate of the detection structure.

The prediction module building module 332 determined that the service life of the damage to the detection structure was lognormal distribution. The density function of the lognormal distribution was as follows:

$$ p(x) = \frac{1}{x\sigma\sqrt{2\pi}} e^{-\frac{(\ln x - \mu)^2}{2\sigma^2}} ; $$

wherein, $\mu$ was a mean value of damage sizes, and $\sigma$ was a standard deviation of the damage sizes.

The damage growth prediction module 333 determined the prior distribution of the verification indicator parameters as a combination of lognormal distribution $f(\theta)$ of the crack growth rate of a detection structure with maximum likelihood estimation $f(x|\theta)$, obtained posterior distribution $f(\theta|x)$ by using a Bayesian probabilistic prediction model in combination with crack data x of the detection structure in the historical damage data, and carried out iterative calculation to obtain the crack growth rate per mile.

The center server 33 provided in the embodiment above acquired historical damage data of a detection structure of the train component, obtained service life distribution characteristics and verification indicator parameters of damage to the detection structure according to the historical damage data, established a Bayesian probability prediction model, obtained prior distribution of verification indicator parameters by means of analysis, optimized model parameters of the Bayesian probability prediction model with the Markov chain Monte Carlo method, and predicted the damage growth rate of the detection structure. The center server 33 predicted the damage growth of the train component by using the Bayesian-MCMC method and based on a great amount of historical data, could carry out a subjective probability estimate of some unknown states of the train component, then correct the probability of occurrence using the Bayesian formula, and making an optimal decision using an expected value and refining probability at last when information was incomplete, providing more accurate and visualized bases for maintenance and replacement of the train, and having a high accuracy of calculation.

The method, apparatus and device in the present invention may be realized by many ways. For example, the method, apparatus and device in the present invention may be realized by software, hardware, firmware or any combination thereof. The sequence of the steps of the method above was only to explain that the steps of the method in the present invention were not limited to the sequence specifically described above, unless otherwise explained particularly. Besides, in some embodiments, the present invention may be further implemented as programs recorded in the recording medium. These programs included machine-readable instructions for realizing the method according to the present invention. Therefore, the present invention further covered a recording medium for storing programs implementing the method according to the present invention.

Description of the present invention is provided for embodiments and description, not exhaustive or limiting the present invention within the form disclosed. Many modifications and changes would have been obvious for a person skilled in the art. The embodiments are selected and described for better explaining the principle and actual application of the present invention, such that a person skilled in the art could understand the present invention, thereby designing embodiments with various modifications applicable to specific use.

**Claims**

1. A method for monitoring crack damage of a train component, **characterized in** comprising:

   providing a cellular sensor network device on a detection structure of a train component to be detected, wherein the cellular sensor network device comprises a plurality of piezoelectric sensors, each of which serves as an excitation signal loading point and/or response signal collection point;

   transmitting a response signal collected by the cellular sensor network device to an on-board data processing device;

   pre-processing the response signal collected by the cellular sensor network device to obtain damage data of the detection structure, wherein the damage data comprises: data on a crack length of the detection structure;

   transmitting the damage data of the detection structure to a center server for storage and subsequent processing.

2. The method of claim 1, **characterized in**:

   a plurality of piezoelectric sensors are arranged to be a honeycomb array comprising at least one basic detection unit in a regular hexagon; each of the piezoelectric sensors is a node in the honeycomb array as an excitation signal loading point and/or response signal collection point;

   the basic detection unit comprises six piezoelectric sensors arranged in a regular hexagon;

   microcontrollers are embedded in the piezoelectric sensors which serve as Lamb wave excitation signalizers and Lamb wave signal receivers.

3. The method of claim 2, **characterized in** further comprising:

   exciting a drive signal on a health detection structure at an excitation signal loading point at a first time interval, and producing a Lamb wave on the detection structure; collecting a first Lamb wave response signal for the Lamb wave at each response signal collection point;

   acquiring a first Lamb wave response signal and establishing a dispersion relationship between the Lamb wave and changes in the transmission angle in an anisotropic composite laminate of the detection structure, and obtaining theoretical speed distribution of the Lamb wave as benchmark information;

   exciting a drive signal on the detection structure to be detected at an excitation signal loading point at a second time interval, and producing a Lamb wave in the detection structure;

   collecting a second Lamb wave response signal for the Lamb wave at each response signal collection point;

   analyzing the second Lamb wave response signal in a time domain and a frequency domain to extract characteristic information; calculating a signal difference coefficient (SDC) value corresponding to each of the response signal collection points with the second Lamb wave response signal as a damage signal and the first Lamb wave response signal as a reference signal on the basis of the damage signal, the reference signal, benchmark information, and characteristic information;

   reconstructing an area where crack damage may exist in the detection structure according to a SDC value obtained and using a principle of probability imaging;

   judging a crack direction on the basis of the SDC value, correcting the SDC value in the crack direction for enhancing reconstructed image information in the crack direction, reconstructing a crack damage image by using the principle of probability imaging, drawing a SDC distribution diagram, evaluating a crack length on the basis of the SDC distribution diagram, and creating the damage data.

4.  The method of claim 1, **characterized in** further comprising:
    the center server predicts the damage growth rate of the detection structure on the basis of historical damage data of the detection structure stored.

5.  The method of claim 4, **characterized in that** predicting a damage growth rate of the detection structure comprises:

    obtaining life distribution characteristics and verification indicator parameters of damage to the detection structure according to the historical damage data, and establishing a Bayesian probability prediction model corresponding to the damage to the detection structure;
    obtaining prior distribution of the verification indicator parameters according to an analysis of the historical damage data;
    optimizing model parameters of the Bayesian probability prediction model using a Markov chain Monte Carlo method, and predicting the damage growth rate of the detection structure.

6.  A system for monitoring crack damage of a train component, **characterized in** comprising: a cellular sensor network device, a multichannel data converter, an on-board data processing device, and a center server;
    the cellular sensor network device being provided on a detection structure of the train component to be detected, and comprising a plurality of piezoelectric sensors, each of which serves as an excitation signal loading point and/or response signal collection point;
    the multichannel data converter being configured to transmit a response signal collected by the cellular sensor network device to the on-board data processing device;
    the on-board data processing device being configured to preprocess the response signal collected by the cellular sensor network device to obtain damage data of the detection structure and transmit the damage data of the detection structure to the center server, wherein the damage data comprises: data on a crack length of the detection structure;
    the center server being configured to store damage data of the detection structure, and processing the damage data to realize remote monitoring of a detection structure of the train component to be detected.

7.  The system according to claim 6, **characterized in**:

    a plurality of piezoelectric sensors are arranged to be a honeycomb array comprising at least one basic detection unit in a regular hexagon; each of the piezoelectric sensors is a node in the honeycomb array as an excitation signal loading point and/or response signal collection point;
    the basic detection unit comprises six piezoelectric sensors arranged in a regular hexagon;
    microcontrollers are embedded in the piezoelectric sensors which serve as Lamb wave excitation signalizers and Lamb wave signal receivers.

8.  The system according to claim 7, **characterized in**: the on-board data processing device comprising:

    a first signal excitation module for exciting a drive signal on a health detection structure at a first time interval using a probe, producing a Lamb wave in the detection structure, and collecting a first Lamb wave response signal for the Lamb wave at each response signal collection point;
    a benchmark information acquisition module for acquiring a first Lamb wave response signal and establishing a dispersion relationship between a Lamb wave and changes in the transmission angle in an anisotropic composite laminate of the detection structure by means of the Mindlin plate theory, and obtaining theoretical speed distribution of the Lamb wave as benchmark Information;
    a second signal excitation module for exciting a drive signal on the detection structure to be detected at a second time interval using a probe, producing a Lamb wave in the detection structure, and collecting a second Lamb wave response signal for the Lamb wave at each response signal collection point;
    a damage information acquisition module for analyzing the second Lamb wave response signal in a time domain and a frequency domain to extract characteristic information; calculating a signal difference coefficient (SDC) value corresponding to each of the response signal collection points with the second Lamb wave response signal as a damage signal and the first Lamb wave response signal as a reference signal on the basis of the damage signal, the reference signal, benchmark information, and characteristic information;
    an imaging analysis module for reconstructing an area where crack damage may exist in the detection structure according to the SDC value obtained and a principle of probability imaging;

judging a crack direction on the basis of the SDC value, correcting the SDC value in the crack direction for enhancing reconstructed image information in the crack direction, and reconstructing a crack damage image by using the principle of probability imaging; drawing a SDC distribution diagram, and evaluating a crack length on the basis of the SDC distribution diagram.

**9.** The system according to claim 6, **characterized in that** the center server predicts the damage growth rate of the detection structure on the basis of historical damage data of the detection structure stored.

**10.** The system according to claim 9, **characterized in**: the center server comprising:

a historical data acquisition module for acquiring historical damage data of the detection structure, wherein the damage data comprises: data on a crack length of the detection structure;

a prediction model building module for obtaining life distribution characteristics and verification indicator parameters of the detection structure according to the historical damage data, and establishing a Bayesian probability prediction model corresponding to damage to the detection structure;

a damage growth prediction module for obtaining prior distribution of the verification indicator parameters according to an analysis of the historical damage data; optimizing model parameters of the Bayesian probability prediction model using a Markov chain Monte Carlo method and predicting the damage growth rate of the detection structure.

Start

Providing a cellular sensor network device on the
detection structure of a train component to be detected — 101

Transmitting a response signal collected by the cellular sensor
network device to an on-board data processing device — 102

Pre-processing the response signal collected by the cellular
sensor network device to obtain damage data of the detection
structure — 103

transmitting damage data of the detection structure to a
server for storage and subsequent processing — 104

*FIG. 1*

*FIG. 2*

Cellular sensor network device 30

Multichannel data conversion device 31

On-board data processing device 32

Center server 33

*FIG. 3*

On-board data processing device 32

First signal excitation module 321

Benchmark information acquisition module 322

Second signal excitation module 323

Damage information acquisition module 324

Imaging analysis module 325

*FIG. 4*

*FIG. 5*

### INTERNATIONAL SEARCH REPORT

| International application No. |
| --- |
| **PCT/CN2019/082492** |

**A. CLASSIFICATION OF SUBJECT MATTER**

G01N 29/04(2006.01)i

According to International Patent Classification (IPC) or to both national classification and IPC

**B. FIELDS SEARCHED**

Minimum documentation searched (classification system followed by classification symbols)

G01N29/-

Documentation searched other than minimum documentation to the extent that such documents are included in the fields searched

Electronic data base consulted during the international search (name of data base and, where practicable, search terms used)

CNKI, CNPAT, WPI, EPODOC: 车, 裂纹, 损伤, 蜂窝, 网络, 压电传感器, 江苏必得科技股份有限公司, 贝叶斯, 增长, 预测, 评估, 长度, 图像, 重构, vechicel, crack, flaw, damag+, network, lamb, SDC, piezoelectric, predict+

**C. DOCUMENTS CONSIDERED TO BE RELEVANT**

| Category* | Citation of document, with indication, where appropriate, of the relevant passages | Relevant to claim No. |
| --- | --- | --- |
| X | CN 104279424 A (THE HONG KONG POLYTECHNIC UNIVERSITY) 14 January 2015 (2015-01-14) description, paragraphs [0027]-[0048], and figures 1-3 | 1, 2, 4-7, 9, 10 |
| Y | CN 104279424 A (THE HONG KONG POLYTECHNIC UNIVERSITY) 14 January 2015 (2015-01-14) description, paragraphs [0027]-[0048], and figures 1-3 | 3, 8 |
| Y | CN 104502457 A (NANJING UNIVERSITY OF POSTS AND TELECOMMUNICATIONS) 08 April 2015 (2015-04-08) description, paragraphs [0046]-[0060] | 3, 8 |
| A | CN 103134857 A (NANJING UNIVERSITY OF POSTS AND TELECOMMUNICATIONS) 05 June 2013 (2013-06-05) entire document | 1-10 |
| A | CN 105051527 A (SIEMENS AG. ET AL.) 11 November 2015 (2015-11-11) entire document | 1-10 |
| A | CN 107870204 A (HUAIYIN NORMAL UNIVERSITY) 03 April 2018 (2018-04-03) entire document | 1-10 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **12 June 2019** | **27 June 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/082492** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2006177705 A (MITSUBISHI HEAVY IND. LTD.) 06 July 2006 (2006-07-06)<br>entire document | 1-10 |

Form PCT/ISA/210 (second sheet) (January 2015)

**INTERNATIONAL SEARCH REPORT**
**Information on patent family members**

International application No.

**PCT/CN2019/082492**

| Patent document cited in search report | | | Publication date (day/month/year) | Patent family member(s) | | | Publication date (day/month/year) |
|---|---|---|---|---|---|---|---|
| CN | 104279424 | A | 14 January 2015 | CN | 104279424 | B | 12 June 2018 |
| CN | 104502457 | A | 08 April 2015 | None | | | |
| CN | 103134857 | A | 05 June 2013 | CN | 103134857 | B | 02 September 2015 |
| CN | 105051527 | A | 11 November 2015 | US | 9792555 | B2 | 17 October 2017 |
| | | | | WO | 2014107303 | A1 | 10 July 2014 |
| | | | | EP | 2941640 | A1 | 11 November 2015 |
| | | | | US | 2014229149 | A1 | 14 August 2014 |
| | | | | JP | 2016509670 | A | 31 March 2016 |
| | | | | KR | 20150103021 | A | 09 September 2015 |
| CN | 107870204 | A | 03 April 2018 | None | | | |
| JP | 2006177705 | A | 06 July 2006 | None | | | |

Form PCT/ISA/210 (patent family annex) (January 2015)